# EUROPEAN PATENT SPECIFICATION

(11) **EP 4 297 606 B1**
(45) Date of publication and mention of the grant of the patent: **24.07.2024**
(21) Application number: 21708966.3
(22) Date of filing: 26.02.2021
(51) Int. Cl.: A43B 23/16, A43B 23/08, B29D 35/14, A43B 1/00, B29C 65/00, B32B 1/00

(54) **METHOD OF MANUFACTURING AT LEAST ONE MULTILAYER STRUCTURE FOR PROTECTIVE CAPS FOR FOOTWEAR.**
VERFAHREN ZUR HERSTELLUNG MINDESTENS EINER MEHRSCHICHTSTRUKTUR FÜR SCHUTZKAPPE FÜR SCHUHE.
PROCÉDÉ DE FABRICATION D'AU MOINS UNE STRUCTURE MULTICOUCHE POUR CONTREFORTS DE CHAUSSURES.

(43) Date of publication of application: 03.01.2024
(73) Proprietor: Gössel, Thorsten, 48282 Emsdetten (DE)
(72) Inventor: CHEN, Tung-Chan, deceased (TW)
(74) Representative: Geskes, Christoph
(86) International application number: PCT/EP2021/054793
(87) International publication number: WO 2022/179693

(56) References cited:
- EP-A1- 0 528 249
- EP-A1- 0 614 623
- EP-A1- 3 081 109
- EP-A2- 0 320 155
- EP-A2- 0 507 322
- EP-A2- 1 284 109
- CN-A- 110 177 688
- FR-A1- 2 748 965
- US-A1- 2004 226 191
- US-A1- 2018 200 986
- US-A1- 2020 305 540
- US-B1- 6 598 323
- US-B1- 6 686 034

## Description

The present invention relates to a method of manufacturing at least one multilayer structure for protective caps, the mulitlayer structure being used in a method of manufacturing the protective caps.

Footwear includes a part that covers the toe. Especially with work shoes also known as protective shoes, this area is important to protect. This is because if a heavy object falls on this part or if this part becomes trapped, the wearer can injure themselves or suffer an injury to their toes. If a heavy object falls on this part, the impact force of the object must be absorbed. To reduce this impact force, a protective toe cap is usually inserted to provide a reinforcing surface for the part of the protective shoe covering the toe.

Many different types of toe protection caps for different occasions are known. EP 0 219 633 A1 discloses a toe cap having an edge strip on the underside which is attached to a bottom web or as part of a bottom plate, the bottom plate corresponding to a support base portion of the toe cap which is in contact with the sole of the foot at the level of the toes.

US 5,111,597 A discloses a toe guard for use in a dance shoe. In this case, the toe cap consists of a small base that provides support that allows a person to stand on the tip of the toe.

FR 2 748 965 A discloses a layered structure for a reinforcing cap and a reinforcing cap suitable for use in articles of footwear.

Such toe protection caps are commonly made of steel, aluminum or plastic, for example polycarbonate, said toe caps protecting the foot from pressure and impacts at least of 200 joules according to EN ISO 20345:2011 standard. The EN ISO 20345:2011 standard regulates the basic requirements for protective shoes. Depending on the use and requirements, a choice can be made between different safety levels.

In addition to the shock-absorbing properties of a toe cap, fuel and chemical resistance as well as antistatic properties are also important, as safety shoes are preferably used in industry. Consequently, conventional steel or aluminum caps are not always the first choice for use in industry. While polymer-based toe caps have good antistatic properties, the shock-absorbing and chemical-resistant properties are often not sufficient. Another aspect is the recyclability of the material used. While steel and aluminum caps can be recycled by simply melting them, the recycling of polymers is more complex and also leads to impairments of the original material properties.

The object of the present invention is to provide a method of manufacturing at least one multilayer structure for protective caps with improved impact and chemical resistance properties.

The invention is disclosed by the subject-matter of independent claim 1.

A protective cap for footwear is manufactured from at least one multilayer structure, comprising
- at least one polymeric layer,
- at least one polymeric bonding material, and
- at least one reinforcing layer,
wherein said at least one polymeric bonding material comprises at least one recycled material and at least one plasticizer.

The polymeric layer forms preferably the top and the bottom layer of the at least one multilayer structure. The polymeric layer stabilizes the at least one multilayer structure and provides a comparable smooth top and bottom of the multilayer structure. During the manufacturing process of the multilayer structure, the at least one polymeric layer acts as protective layer for the at least one reinforcing layer. Further, the at least one polymeric layer bonds to the at least one reinforcing layer and/or at least one polymeric bonding material by fusion during the manufacture of the multilayer structure. The at least one polymeric layer is made of at least one polymer. Preferably, the at least one polymeric layer is made of polyamide, also known as nylon. The at least one polymeric layer even more preferred comprises at least one recycled material. Preferably, the at least one polymeric layer is in a form selected from a group comprising a polymeric film and/or a polymeric fabric. Preferably, the at least one polymeric layer is a woven rowing with an area weight in a range of approximately 150 g/m² to approximately 400 g/m². The weave of the preferred woven rowing is preferably plain. Even more preferred, the at least one polymeric layer has a fiber count in a range of approximately 20 Tt to approximately 40 Tt for warp and a fiber count in a range of approximately 20 Tt to approximately 40 Tt for welt 29 Tt. The polymeric layer has preferably a thickness in a range of approximately 001 mm to approximately 1.0 mm. The at least one polymeric layer is comprised in the multilayer structure in a range of approximately 0.1 wt-% to approximately 20 wt-% and even more preferred in a range of 1 wt-% to approximately 15 wt-%, referring to the total amount of the multilayer structure.

The polymeric bonding material is used to form layers in the at least one multilayer structure. The polymeric bonding material is preferably staged in between reinforcing layers and/or between at least on reinforcing layer and the at least one polymeric layer. Even more preferred, the at least one polymeric bonding material is staged between two or more reinforcing layers. The polymeric bonding material is melted during the manufacturing process of the multilayer structure. Due to the melting of the polymeric bonding material the layers of the multilayer structure are bound together. Based on this the at least one polymeric bonding material acts as binding layer in the at least one multilayer structure. The at least one polymeric bonding material comprise at least one recycled material and at least one plasticizer. The at least one polymeric bonding material is preferably made of at least one polymer selected from a group comprising nylon, polyurethane, polycarbonate, polyethylene, and mixtures thereof. Even more preferred, the at least one polymeric bonding material is made of polyamide, also known as nylon. Preferably, the at least one polymeric bonding material is used in a form selected from a group comprising pellets, powders, and mixtures thereof. Preferably, the polymeric bonding material is used in form of a powder. The polymeric bonding material powder has preferably a grain size in a range of approximately 150 µm to approximately 500 µm. The at least one polymeric bonding material is comprised in the multilayer structure in a range of approximately 15 wt-% to approximately 50 wt-% and even more preferred in a range of 20 wt-% to approximately 45 wt-%, referring to the total amount of the multilayer structure.

The at least one polymeric bonding material is made of at least one recycled material and at least one plasticizer. The components of the at least one polymeric bonding material are described in more detail below.

The at least one recycled material is at least one recycled polymer. Preferably, the at least one recycled material is selected from a group comprising nylon, polyurethane, polycarbonate, polyethylene, and mixtures thereof. Even more preferred the at least one recycled material is recycled polyamide, also known as nylon. Most preferred the at least one recycled material is made of polyhexamethylene adipic acid amide. Most preferred, the at least one recycled material has the chemical formula of (C₆H₁₁NO)ₙ, wherein n is n=50 up to n=2000.

The recycled material comprises approximately 30 wt-% to approximately 35 wt-% of marine plastic means regained plastic from the sea, referred to the total amount of the recycled material. The recycled material comprises approximately 65 wt-% up to approximately 70 wt-% of freshly produced nylon, referred to the total amount of the recycled material. The at least one recycled material is preferably in the form of a granular, white solid. Further, the at least one recycled material has a density of approximately 1.0 g/cm³ to approximately 2.0 g/cm³ measured according ISO 1183-1:2019. The at least one recycled material has preferably a purity of at least 99 %. The at least one recycled material has preferably an impact strength of approximately 10 kJ/m² to 20 kJ/m² measured according ISO 179/1eA. The at least one recycled material has preferably a tensile strength in a range of approximately 45 MPa to approximately 65 MPa measured according ISO 527. The at least one recycled material has preferably a melt mass-flow rate in a range of approximately 10 g/10 min to approximately 20 g/10 min, wherein the melt-mass-flow rate was measured of 2.16 kg melted material and at a temperature of 230 °C according GB/T 3682-2000 (Standard for the determination of the melt mass-flow rate (MFR) and the melt volume-flow rate (MVR) of thermoplastics). Preferably, the at least one recycled material is comprised in the at least one polymeric bonding material in an amount of approximately 80 wt-% to approximately 99.9 wt-%, referred to the total amount of the at least one polymeric bonding material. Preferably, the at least one recycled material is comprised in the at least one multilayer structure in a range of approximately 12 wt-% to approximately 40 wt-%, referred to the total amount of the multilayer structure.

The at least one plasticizer advantageously reduces the melting temperature during the melting process and increases the flowability of the material during production. In addition, the at least one plasticizer increases the resilience of the protective caps. The at least one recycled material and the at least one plasticizer are blended by melting. Preferably, the at least one plasticizer is selected from a group comprising polyolefin elastomers, white oils, paraffin oils, carboxylic acid esters, camphor, and mixtures thereof. More preferred, the at least one plasticizer is a polyolefin elastomer build of compounds selected from the group comprising polypropylene, ethylene propylene diene, natural rubber, ethylene propylene copolymers, maleic anhydride, nylon, and mixtures thereof. Polyolefin elastomers, also known as POE and TPE-O, are polymer blends comprising an elastomer and a thermoplastic component. Typical representatives of polyolefin elastomers are polyolefin-based, which consist of ethylene/propylene/(diene) elastomers and polypropylene (PP). POEs combine many of the properties of elastomers with the advantages of thermoplastic processability. The advantages of POE are improved mechanical properties, improved resistance to aggressive media such as chemicals and ozone, lower manufacturing costs and recyclability. An important advantage of POE is that it can be manufactured from many existing material combinations. An important difference lies in the morphology. The higher-melting thermoplastic component provides the matrix here, while the elastomer is distributed as finely as possible. In order to stabilize the morphologies and, for example, improve the recovery properties, the elastomer is cross-linked or partially cross-linked. The best way to achieve this is dynamic vulcanization. In this process, the elastomer is simultaneously "dynamically" cross-linked and dispersed under the influence of high shear during melt processing. Very good material properties can be achieved with POEs. Depending on their composition, polyolefin elastomers have a Shore A hardness in a range of approximately 70 to approximately 80 and a Shore D hardness in a range of approximately 30 to approximately 45. The application range of the POE extends over a temperature range of approximately - 50 °C to approximately 110 °C based on the composition of the POE. Preferably, the at least one plasticizer is comprised in an amount of approximately 0.1 wt-% to approximately 20 wt-% and more preferred of approximately 0.1 wt-% to approximately 15 wt-%, referred to the total amount of the at least one polymeric bonding material. Preferably, the at least one plasticizer is comprised in the at least one multilayer structure in a range of approximately 0.015 wt-% to approximately 10 wt-%, and more preferred in a range of approximately 0.1 wt-% to approximately 5 wt-%, referred to the total amount of the multilayer structure.

The reinforcing layer stabilizes the protective toe cap according to the present invention. Further, the protective toe cap is getting better shock absorbing properties. In the at least one multilayer structure, the at least one reinforcing layer is preferably arranged alternately with the at least one polymeric binding material. Preferably, the at least one reinforcing layer is selected from a group comprising fiber glass fabric, carbon fiber fabric, natural fiber fabric, and mixtures thereof. Preferably, the at least one reinforcing layer is a woven rowing with a width in a range of approximately 900 mm to approximately 1300 mm. The weave of the preferred woven rowing is preferably plain. The preferred thread count of the woven rowing is approximately 2.50 x 2.30 per cm. The preferred glass type is selected of a group comprising E-glass, ECR-glass and ECT-glass. Even more preferred is E-glass for the at least one reinforcing layer. The at least one reinforced layer is preferably a white, odorless solid. The at least one reinforcing layer has preferably a specific gravity in a range of approximately 1,5 g/cm³ to approximately 3,5 g/cm³ , referenced by water with 1 g/cm³. Preferably, the at least one reinforcing layer is comprised in the at least one multilayer structure in a range of approximately 30 wt-% to approximately 75 wt-%, and more preferred in a range of approximately 45 wt-% to approximately 70 wt-%, referred to the total amount of the multilayer structure.

The multilayer structure comprises at least one polymeric layer, at least one polymeric bonding material and at least one reinforced layer. The polymeric layers form preferably the top and the bottom layer of the multilayer structure. Preferably, the reinforcing layer and the polymeric bonding material are arranged in an alternating manner. Even more preferred, the polymeric bonding material is only forming layers between the reinforcing layers. By a preferred alternating staggering of the reinforcing layer and the polymeric bonding material, the number of the layers made of the polymeric bonding material is *n* and the number of reinforcing layers is n+1. Further additives are preferably selected from the group comprising lubricants, protectors, anti-oxidation agents, thermal protection agents and a mixture thereof. The at least one multilayer structure comprises preferably further additives in a range of approximately 0,001 wt-% to approximately 15 wt-%, more preferred in a range of approximately 0,001 wt-% to approximately 10 wt-%, in relation to the total amount of the multilayer structure.

The present invention relates to a method of manufacturing at least one multilayer structure as described above, comprising
(a) stacking individual layers of the at least one polymeric layer, the at least one polymeric bonding agent and at least one reinforcing layer between two plate moulds;
(b) heating the stacked layers in a range of from approximately 250 °C to approximately 400 °C;
(c) applying a real pressure to the stacked layers in a range of approximately 500 PSI (3,447,000 Pa) to approximately 2000 PSI (13,790,000 Pa);
(d) cooling the fused stacked layers at a pressure of approximately 900 PSI (6,205,000 Pa) to approximately 2500 PSI (17,237,000 Pa); and
(e) removing the two plate moulds to obtain the at least one multilayer structure.

In step (a), individual layers of the at least one polymeric layer, the at least one polymeric bonding agent and at least one reinforcing layer are stacked between two plate moulds. The two plate moulds are preferably enclosing the stacked layers during step (b) to (e) for stabilizing. Preferably, the stacking of the layers of the at least one polymeric bonding material and the at least one reinforcing layer is performed alternately. Further preferred, the at least one polymeric layer is the first layer and/or the last layer. Even further preferred, the number of the at least one reinforcing layers is n+1, wherein n is the number of layers made of the at least one polymeric bonding material.

In step (b), the stacked layers are heated in a range of from approximately 250 °C to approximately 400 °C. The temperature of step (b) is preferably selected to cause the at least one polymeric bonding material to melt and bond the layers of the at least one polymeric layer and the at least one reinforcing layers together. The stacked layers of reinforcing layers are bonded together by the molten polymeric bonding material. Since also the material of the polymeric layer melts at said temperatures, also said polymeric layer becomes bounded by the polymeric material and to the at least one reinforcing layer. Based on this, the stacked layers become fused stacked layers by melting the at least one polymeric bonding material and the at least one polymeric layer in step (b).

In step (c), the pressure is applied to the stacked layers in a range of approximately 500 PSI (3,447,000 Pa) to approximately 2000 PSI (13,790,000 Pa). Preferably, the pressure is applied by a hydraulic press. Preferably, step (b) and step (c) are carried out at the same time.

In step (d), the fused stacked layers is cooled at a pressure of approximately 900 PSI (6,205,000 Pa) to approximately 2500 PSI (17,237,000 Pa). Preferably, water is used as a cooling medium in step (d). Preferably, a hydraulic press is used in step (d).

In step (e), the two plate moulds are removed to obtain the at least one multilayer structure.

The method of manufacturing at least one multilayer structure further comprises
(i) cutting the multilayer structure into segments;
(ii) heating the segment in an infrared oven at a temperature range from approximately 200 °C to approximately 350 °C;
(iii) putting the heated multilayer structure segment in a heated cap mould in order to form a protective cap;
(iv) pressing the heated multilayer structure segment in the heated cap mould with a pressure in a range of approximately 1000 PSI (6,895,000 Pa) to approximately 3000 PSI (20,684,000 Pa) to gain the protective cap.

In step (i), the multilayer structure is cut into segments. Preferably, the cutting in step (i) is applied in such a way to obtain the desired shape of said protective cap. The desired shape of the protective cap depends inter alia on the shoe size. The cutting is preferably applied by a punching machine. Preferably, a segment obtained in step (i) is weighed before step (ii) is applied. The segments of the multilayer structure are sorted and used for different areas of the caps depending on size and weight, so that not only the total weight of the obtained protective caps is consistent, but also the material thickness and density.

In step (ii), an obtained segment of the multilayer structure is heated in an infrared oven at a temperature range from approximately 200 °C to approximately 350 °C. After the segment has been heated, the heated segment is placed in a heated mould. Preferably, the temperature of the heated mould is in a range of approximately 50 °C to approximately 200 °C.

In step (iii), the heated multilayer structure segment is put in a heated cap mould in order to form a protective cap.

In step (iv), the heated multilayer structure segment is pressed in the heated cap mould with a pressure in a range of approximately 1000 PSI (6,895,000 Pa) to approximately 3000 PSI (20,684,000 Pa) to gain the protective cap. Preferably, the pressing in step (iv) is applied in a time range of approximately 20 sec to approximately 60 sec. Preferably, the protective cap obtained in step (iv) is polished to smoothen the edges. The obtained protective cap of step (iv) has preferably a total weight in a range of approximately 50 g to approximately 90 g. To finish the obtained protective cap, the item number and the production logo is printed on the protective cap. Preferably, a product test is carried out for impact resistance and possible production errors.

As far as the term weight percent or % by weight is used with respect to the components being comprised from the claimed composition, the term weight percent is referred to the amount of one or more components relative to the total amount of the composition throughout this specification, except where expressively stated otherwise. The expression "wt-%" is used throughout the present invention as an abbreviation for weight percent if not indicated otherwise.

In the context of the invention, the expressions "about" and "approximately" in connection with numerical values or ranges are to be understood as a tolerance range, which a person skilled in the art would consider as common or reasonable based on his or her general knowledge and in view of the invention as a whole. In particular, the expressions "about" and "approximately" refer to a tolerance range of ±20 %, preferred ±10 % and further preferred ±5 % with respect to the designated value. The lower end values and the upper end values of the various ranges, especially the weight percent ranges, but not restricted thereto, claimed in the present invention may be combined with each other in order to define new ranges.

Further, in the context of the present invention, all references to standards, norms, or standardization protocols, e.g. ISO, ASTM etc., in connection with properties, numerical values or ranges referred to are to be understood as the latest updated version of said standard, norm, or standardization protocol being in force at the date of filling of the invention.

Preferably, the protective cap is composed of at least one multilayer structure manufactured by the method and comprising
- at least one polymeric layer,
- at least one polymeric bonding material, and
- at least one reinforcing layer;
wherein said at least one polymeric bonding material comprises at least one recycled material and at least one plasticizer, wherein the at least one polymeric layer is made of at least one polymer, wherein the at least one polymeric layer is preferably made of polyamide, wherein the at least one polymeric layer is preferred made of a material in a form selected from a group comprising a polymeric film and/or a polymeric fabric and wherein the polymeric layer has preferably a thickness in a range of approximately 0.01 mm to approximately 1.0 mm, wherein the at least one polymeric layer is comprised in the multilayer structure in a range of approximately 0.1 wt-% to approximately 20 wt, referring to the total amount of the multilayer structure.

Preferably, the protective cap is composed of at least one multilayer structure manufactured by the method and comprising
- at least one polymeric layer,
- at least one polymeric bonding material, and
- at least one reinforcing layer;
wherein said at least one polymeric bonding material comprises at least one recycled material and at least one plasticizer, wherein the at least one polymeric bonding material is preferably made of at least one polymer as the at least one recycled material selected from a group comprising nylon, polyurethane, polycarbonate, polyethylene, and mixtures thereof, wherein the at least one polymeric bonding material is comprised in the multilayer structure in a range of approximately 15 wt-% to approximately 50 wt-%, referring to the total amount of the multilayer structure.

Preferably, the protective cap is composed of at least one multilayer structure manufactured by the method and comprising
- at least one polymeric layer,
- at least one polymeric bonding material, and
- at least one reinforcing layer;
wherein said at least one polymeric bonding material comprises at least one recycled material and at least one plasticizer, wherein the at least one reinforcing layer is preferably selected from a group comprising fiber glass fabric, carbon fiber fabric, natural fiber fabric, and mixtures thereof, wherein the at least one reinforced layer is preferably a woven rowing with a width in a range of approximately 900 mm to approximately 1300 mm, wherein the preferred glass type is selected of a group comprising E-glass, ECR-glass and ECT-glass. Even more preferred is E-glass for the at least one reinforcing layer, wherein the at least one reinforced layer is preferably comprised in the at least one multilayer structure in a range of approximately 30 wt-% to approximately 75 wt-%, referring to the total amount of the multilayer structure.

Preferably, the protective cap is composed of at least one multilayer structure manufactured by the method and comprising
- at least one polymeric layer,
- at least one polymeric bonding material, and
- at least one reinforcing layer;
wherein said at least one polymeric bonding material comprises at least one recycled material and at least one plasticizer, wherein the at least one recycled material is preferably selected from a group comprising nylon, polyurethane, polycarbonate, polyethylene, and mixtures thereof, wherein the at least one recycled material is preferably comprised in an amount of approximately 80 wt-% to approximately 99.9 wt-%, referring to the total amount of the at least one polymeric bonding material, and wherein the at least one recycled material is preferably comprised in the at least one multilayer structure in a range of approximately 12 wt-% to approximately 40 wt-%, referring to the total amount of the multilayer structure.

Preferably, the protective cap is composed of at least one multilayer structure manufactured by the method and comprising
- at least one polymeric layer,
- at least one polymeric bonding material, and
- at least one reinforcing layer;
wherein said at least one polymeric bonding material comprises at least one recycled material and at least one plasticizer, wherein the at least one plasticizer is preferably selected from a group comprising polyolefin elastomers, white oils, paraffin oils, carboxylic acid esters, camphor, and mixtures thereof, and wherein the at least one plasticizer is preferably comprised in an amount of approximately 0.1 wt-% to approximately 20 wt-%, referred to the total amount of the at least one polymeric bonding material, and wherein the at least one plasticizer is comprised in the at least one multilayer structure in a range of approximately 0.015 wt-% to approximately 10 wt-%, referring to the total amount of the multilayer structure.

Preferably, the protective cap is composed of at least one multilayer structure manufactured by the method and comprising
- at least one polymeric layer,
- at least one polymeric bonding material, and
- at least one reinforcing layer;
wherein said at least one polymeric bonding material comprises at least one recycled material and at least one plasticizer, wherein the at least one polymeric layer is comprised in the multilayer structure in a range of approximately 0.1 wt-% to approximately 20 wt-%, wherein the at least one polymeric bonding material is comprised in the multilayer structure in a range of approximately 15 wt-% to approximately 50 wt-%, wherein the multilayer structure preferably comprises the at least one reinforcing layer in a range of approximately 30 wt-% to approximately 75 wt-%, and wherein the at least one multilayer structure comprises preferably further additives in a range of approximately 0.001 wt-% to approximately 15 wt-%, each of the aforesaid weight percent ranges referring to the total amount of the multilayer structure.

Preferably, the protective cap is composed of at least one multilayer structure manufactured by the method and comprising
- at least one polymeric layer,
- at least one polymeric bonding material, and
- at least one reinforcing layer;
wherein said at least one polymeric bonding material comprises at least one recycled material and at least one plasticizer, wherein the at least one polymeric layer is comprised in the multilayer structure in a range of approximately 0.1 wt-% to approximately 20 wt-%, referring to the total amount of the multilayer structure, wherein the at least one polymeric layer is preferably a polyamide, wherein the at least one polymeric bonding material is made of a polymer selected from a group comprising nylon, polyurethane, polycarbonate, polyethylene, and mixtures thereof, wherein the at least one polymeric bonding material is comprised in the multilayer structure in a range of approximately 15 wt-% to approximately 50 wt-%, referring to the total amount of the multilayer structure, wherein the at least one reinforcing layer is preferably selected from a group comprising fiber glass fabric, carbon fiber fabric, natural fiber fabric, and mixtures thereof, wherein the at least one reinforced layer is preferably a woven rowing with a width in a range of approximately 900 mm to approximately 1300 mm, wherein the preferred glass type is selected of a group comprising E-glass, ECR-glass and ECT-glass. Even more preferred is E-glass for the at least one reinforcing layer, wherein the at least one reinforced layer is preferably comprised in the at least one multilayer structure in a range of approximately 30 wt-% to approximately 75 wt-%, in relation to the total amount of the multilayer structure, wherein the at least one recycled material is selected from a group comprising nylon, polyurethane, polycarbonate, polyethylene, and mixtures thereof, wherein even more preferred the at least one recycled material is recycled polyamide, also known as nylon, wherein the at least one recycled material is preferably comprised in an amount of approximately 80 wt-% to approximately 99.9 wt-%, referred to the total amount of the at least one polymeric bonding material, and wherein the at least one recycled material is comprised in the at least one multilayer structure in a range of approximately 12 wt-% to approximately 40 wt-%, referring to the total amount of the multilayer structure, wherein the at least one plasticizer is selected from a group comprising polyolefin elastomers, white oils, paraffin oils, carboxylic acid esters, camphor, and mixtures thereof, wherein the at least one plasticizer is comprised in an amount of approximately 0.1 wt-% to approximately 20 wt-%, referred to the total amount of the at least one polymeric bonding material, and wherein the at least one plasticizer is comprised in the at least one multilayer structure in a range of approximately 0.015 wt-% to approximately 10 wt-%, referring to the total amount of the multilayer structure.

The present invention will be hereunder described in more detail with reference to the following non-limitating example.

As recycled material recycled polyamide 6 having a molecular weight of 115.17 with the tradename RPA6 sold by Henan Pingyuan New Material Technology Co Ltd, Machinery Park, No. 1, Changfeng Road, Fugou County Industrial Cluster District, Zhoukou City, Henan Province was used. As reinforcing material E-glass Woven Roving with the trade name EWR600-1000 from Direct Rowings was used. As plasticizer a polyolefin elastomer, further named Zytel, with the tradename Zytel 444AHS BK152 sold by DuPont GmbH, Christbusch 25, 42285 Wuppertal, Germany, was used.

In the following, the invention will be described in more detail with reference to the drawings, in which:
- FIG. 1: shows the sequence of the polymeric layers **10,** the reinforcing layer **12** and the polymeric bonding material **14** in the at least one multilayer structure **1** in strep (a) of the manufacturing process of the at least one multilayer structure **1;**
- FIG. 2: shows the manufacturing process of the at least one multilayer structure **1** for the protective toe cap **100;**
- FIG. 3: depicts the manufacturing process of the protective toe cap **100** using the at least one multilayer structure **1.**

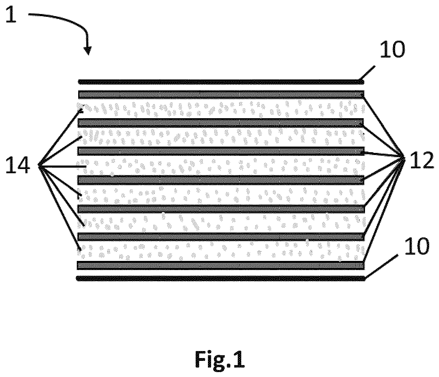

FIG. 1 shows schematically the staggered layers of the at least one multilayer structure **1.** As the polymeric layer **10** a nylon film was used. Two layers of the nylon film with a thickness of 0.38 mm and an area weight of 250 g/m² were used for the stacking of the multilayer structure **1.** Each of the nylon film weights 120 g. The polymeric layers **10** form the top and the bottom layer of the multilayer structure **1.** On the first layer of the nylon film **10** a reinforcing layer **12** was put. As reinforcing layer **12,** a woven E-glass Woven Roving, further named as EWR600, with a weight of 344 g was used. The next layer was made of polymeric bonding material **14.** The polymeric bonding material **14** was made from 10 wt-% plasticizer, further referred to as Zytel, and 90 wt-% recycled material, further referred to as RPA6, by mixing the two components. 215 g of the polymeric bonding material **14** was used to form a layer. The reinforcing layer **12** EWR600 and the polymeric bonding material 14 were stacked in an alternating manner. In total, seven layers of the EWR600 with a specific gravity of 2.0 g/m3 were stacked in an alternating manor with six layers made out of the mixed polymeric bonding material **14.** On top of the seventh reinforcing layer **12,** the second nylon film was placed as polymeric layer **10** to finish the stacking according to step (a) of the below described manufacturing process of the at least one multilayer structure **1.**

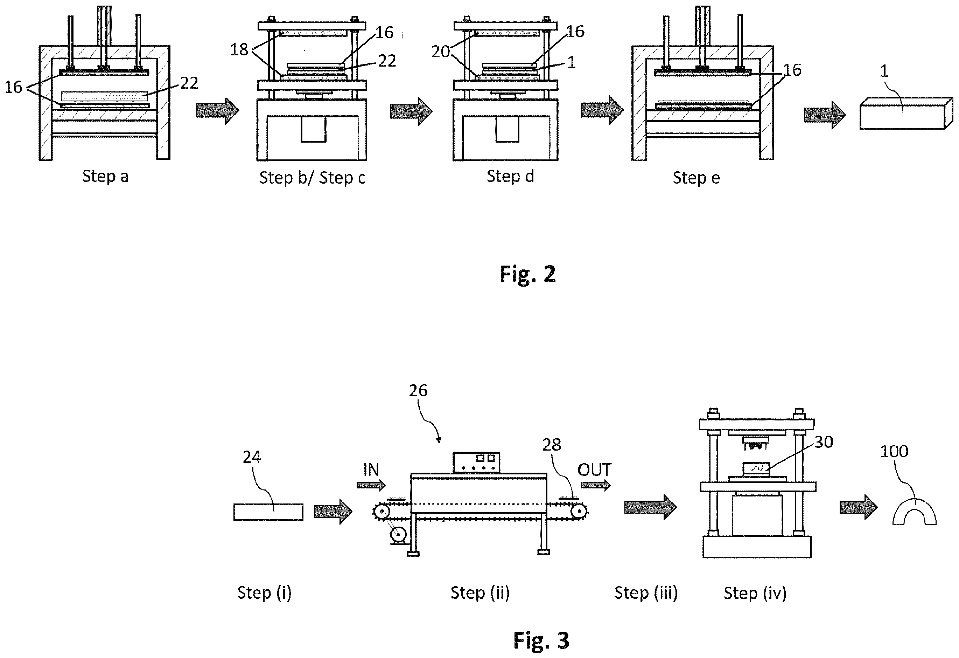

FIG. 2 depicts the inventive manufacturing process of the at least one multilayer structure **1.** In step (a), the unbounded layers **22** of the multilayer structure were stacked according to FIG. 1. Then, the first layer of EWR600 as reinforcing layer **12** was put on the nylon film. A first layer of RPA6 as polymeric bonding material **14** was put on the EWR600. In total, seven layers of EWR600 were alternated with six layers of RPA6. To finish the stacking, a second nylon film **10** was put on the staggered layers. The two plate moulds **16** of the hydraulic press were opened and the stacked layers were put into the plate moulds **16** on the hydraulic press with a heater **18.** Then the plate moulds **16** were closed. The stacked layers in the hydraulic press were heated to 350 °C by applying a pressure of 1000 PSI (6,895,000 Pa) according step (b) and step (c) of the process in accordance with the present invention. After heating under pressure, the obtained fused stacked layers were put into a cooling hydraulic press with a water cooling system **20.** In step (d), the fused stacked layers were cooled to room temperature of 23 °C at a pressure of 1300 PSI (8,963,200 Pa). The plate moulds **16** were removed to obtain desired multilayer structure **1** according step (e). The obtained multilayer structure **1** had a weight of 3.94 g.

FIG. 3 depicts the manufacturing process of the protective toe cap **100.** The obtained multilayer structure 1 of the proceeding manufacturing process described in FIG. 2 was cut into segments **24** according step (i) of the manufacturing process of the present invention. The cut for the segment **24** was made in the desired shape of the inventive protective cap **100** in the punching machine. After weighing the segment **24** of the melted multilayer structure **22,** the segment **24** was heated in an infrared oven **26** at a temperature of 270 °C in step (ii). In the next step, the heated multilayer structure segment **28** was put into a heated cap mould **30** in order to form the desired inventive protective cap **100.** The heated cap mould **30** had a temperature of 80 °C to 120 °C. In step (iv), the heated multilayer structure segment **28** was pressed into the heated cap mould **30** with a pressure of 2000 PSI (13,790,000 Pa) for 40 sec. The obtained desired protective cap **100** was took out of the cap mould. The protective cap **100** had a weight of 65 g. The obtained desired protective cap **100** was tested according the standard EN 12568-S: 10.11.2020. For refinement, the protective cap **100** was polished and printed with a logo as well as the Global Recycled Standard seal.

### LIST OF REFERENCE NUMBERS

- 1: multilayer structure
- 10: polymeric layer
- 12: reinforcing layer
- 14: polymeric bonding material
- 16: plate mould
- 18: heater
- 20: water cooling system
- 22: unbounded layers
- 24: segment
- 26: infrared oven, also known as IR oven
- 28: heated multilayer structure segment
- 30: mould of protective cap
- 100: protective caps

## Claims

1. Method of manufacturing at least one multilayer structure (1) for protective caps for footwear, comprising
- at least one polymeric layer (10),
- at least one polymeric bonding material (12), and
- at least one reinforcing layer (14),
wherein said at least one polymeric bonding material comprises at least one recycled material and at least one plasticizer, the method comprising
(a) stacking individual layers of the at least one polymeric layer (10), the at least one polymeric bonding agent (12) and at least one reinforcing layer (14) between two plate moulds (16);
(b) heating the stacked layers in a range of from approximately 250 °C to approximately 400 °C;
(c) applying a real pressure to the stacked layers in a range of approximately 3,447,000 Pa to approximately 13,790,000 Pa;
(d) cooling the fused stacked layers at a pressure of approximately 6,205,000 Pa to approximately 17,237,000 Pa; and
(e) removing the two plate moulds (16) to obtain the at least one multilayer structure (1).

2. Method of manufacturing at least one multilayer structure (1) according to claim 1, **characterized in that** step (b) and step (c) are carried out at the same time.

3. Method of manufacturing at least one multilayer structure (1) according to one or more of claims 1 to 2, **characterized in that** water is used as a cooling medium in step (d).

4. Method of manufacturing at least one multilayer structure (1) according to one or more of claims 1 to 3, **characterized in that** a hydraulic press is used in step (d).

5. Method of manufacturing at least one multilayer structure (1) according to one or more of claims 1 to 4, comprising
(i) cutting the multilayer structure (1) into segments (24);
(ii) heating the segment (24) in an infrared oven (26) at a temperature range from approximately 200 °C to approximately 350 °C;
(iii) putting the heated multilayer structure segment (28) in a heated cap mould (30) in order to form a protective cap (100);
(iv) pressing the heated multilayer structure segment (28) in the heated cap mould (30) with a pressure in a range of approximately 6,895,000 Pa to approximately 20,684,000 Pa to gain the protective cap (100).

6. Method of manufacturing at least one multilayer structure (1) according to claim 5, **characterized in that** the cutting in step (i) is applied in the desired shape of said protective cap (100).

7. Method of manufacturing at least one multilayer structure (1) according to one or more of claims 5 to 6, **characterized in that** the segment (24) of step (i) is weighed before step (ii) is applied.

8. Method of manufacturing at least one multilayer structure (1) according one or more of claims 5 to 7, **characterized in that** the temperature of the heated mould (30) is in a range of approximately 50°C to approximately 200 °C.

9. Method of manufacturing at least one multilayer structure (1) according one or more of claims 5 to 8, **characterized in that** the pressing in step (iv) is applied in a time range of approximately 20 sec to approximately 60 sec.

10. Method of manufacturing at least one multilayer structure (1) according one or more of claims 5 to 9, **characterized in that** the protective cap (100) obtained in step (iv) is polished to smoothen the edges.

## Patentansprüche

1. Verfahren für die Herstellung mindestens einer mehrschichtigen Struktur (1) für Schutzkappen für Schuhwerk, die Folgendes aufweist:
- mindestens eine polymere Schicht (10),
- mindestens ein polymeres Bindematerial (12), und
- mindestens eine Verstärkungsschicht (14),
wobei das mindestens eine polymere Bindematerial mindestens ein recyceltes Material und mindestens einen Weichmacher aufweist, wobei das Verfahren die folgenden Schritte aufweist:
(a) Stapeln einzelner Schichten der mindestens einen polymeren Schicht (10), des mindestens einen polymeren Bindematerials (12) und der mindestens einen Verstärkungsschicht (14) zwischen zwei Plattenformen (16);
(b) Erhitzen der gestapelten Schichten in einem Bereich von etwa 250 °C bis etwa 400 °C;
(c) Aufbringen eines tatsächlichen Drucks auf die gestapelten Schichten in einem Bereich von etwa 3 447 000 Pa bis etwa 13 790 000 Pa;
(d) Kühlen der verschmolzenen gestapelten Schichten bei einem Druck in einem Bereich von etwa 6 205 000 Pa bis etwa 17 237 000 Pa; und
(e) Entfernen der beiden Plattenformen (16), um die mindestens eine mehrschichtige Struktur (1) zu erhalten.

2. Verfahren für die Herstellung mindestens einer mehrschichtigen Struktur (1) gemäß Anspruch 1, **dadurch gekennzeichnet, dass** der Schritt (b) und der Schritt (c) zu der selben Zeit durchgeführt werden.

3. Verfahren für die Herstellung mindestens einer mehrschichtigen Struktur (1) gemäß einem oder mehreren der Ansprüche 1 bis 2, **dadurch gekennzeichnet, dass** in dem Schritt (d) Wasser als ein Kühlmedium verwendet wird.

4. Verfahren für die Herstellung mindestens einer mehrschichtigen Struktur (1) gemäß einem oder mehreren der Ansprüche 1 bis 3, **dadurch gekennzeichnet, dass** in dem Schritt (d) eine hydraulische Presse verwendet wird.

5. Verfahren für die Herstellung mindestens einer mehrschichtigen Struktur (1) gemäß einem oder mehreren der Ansprüche 1 bis 4, das die folgenden Schritte aufweist
(i) Schneiden der mehrschichtigen Struktur (1) in Segmente (24);
(ii) Erhitzen des Segments (24) in einem Infrarotofen (26) bei einer Temperatur in einem Bereich von etwa 200 °C bis etwa 350 °C;
(iii) Legen des erhitzten mehrschichtigen Struktursegments (28) in eine erhitzte Kappenform (30), um eine Schutzkappe (100) zu bilden;
(iv) Pressen des erhitzten mehrschichtigen Struktursegments (28) in der erhitzten Kappenform (30) mit einem Druck in einem Bereich von ungefähr 6 895 000 Pa bis ungefähr 20 684 000 Pa, um die Schutzkappe (100) zu erhalten.

6. Verfahren für die Herstellung mindestens einer mehrschichtigen Struktur (1) gemäß Anspruch 5, **dadurch gekennzeichnet, dass** das Schneiden in dem Schritt (i) in der gewünschten Gestalt der Schutzkappe (100) durchgeführt wird.

7. Verfahren für die Herstellung mindestens einer mehrschichtigen Struktur (1) gemäß einem oder mehreren der Ansprüche 5 bis 6, **dadurch gekennzeichnet, dass** das Segment (24) aus dem Schritt (i) gewogen wird, bevor der Schritt (ii) angewendet wird.

8. Verfahren für die Herstellung mindestens einer mehrschichtigen Struktur (1) gemäß einem oder mehreren der Ansprüche 5 bis 7, **dadurch gekennzeichnet, dass** sich die Temperatur der erhitzten Form (30) in einem Bereich von etwa 50 °C bis etwa 200 °C befindet.

9. Verfahren für die Herstellung mindestens einer mehrschichtigen Struktur (1) gemäß einem oder mehreren der Ansprüche 5 bis 8, **dadurch gekennzeichnet, dass** das Pressen in dem Schritt (iv) in einem Zeitbereich von etwa 20 s bis etwa 60 s angewandt wird.

10. Verfahren für die Herstellung mindestens einer mehrschichtigen Struktur (1) gemäß einem oder mehreren der Ansprüche 5 bis 9, **dadurch gekennzeichnet, dass** die Schutzkappe (100), die in dem Schritt (iv) erhalten wurde, poliert wird, um die Kanten zu glätten.

## Revendications

1. Procédé pour la fabrication d'au moins une structure multicouche (1) pour des capuchons de protection pour chaussures, comprenant les étapes suivantes :
- au moins une couche polymère (10),
- au moins un matériau de liaison polymère (12), et
- au moins une couche de renforcement (14),
dans lequel ledit au moins un matériau de liaison polymère comprend au moins un matériau recyclé et au moins un plastifiant, le procédé comprenant
(a) empiler des couches individuelles d'au moins une couche polymère (10), d'au moins un matériau de liaison polymère (12) et d'au moins une couche de renforcement (14) entre deux moules à plaque (16) ;
(b) chauffer les couches empilées dans une domaine allant d' environ 250 °C à environ 400 °C ;
(c) appliquer une pression réelle aux couches empilées dans un domaine allant d' environ 3 447 000 Pa à environ 13 790 000 Pa ;
(d) refroidir les couches empilées fusionnées à une pression comprise entre environ 6 205 000 Pa et environ 17 237 000 Pa ; et
(e) retrait des deux moules à plaque (16) pour obtenir au moins une structure multicouche (1).

2. Procédé pour la fabrication d'au moins une structure multicouche (1) selon la revendication 1, **caractérisé par le fait que** l' étape (b) et l' étape (c) sont effectuées en même temps.

3. Procédé pour la fabrication d'au moins une structure multicouche (1) selon l' une ou plusieurs des revendications 1 à 2, **caractérisé par le fait que** de l' eau est utilisée comme un médium de refroidissement à l' étape (d).

4. Procédé pour la fabrication d'au moins une structure multicouche (1) selon l' une ou plusieurs des revendications 1 à 3, **caractérisé par le fait que** une presse hydraulique est utilisée à l' étape (d).

5. Procédé pour la fabrication d'au moins une structure multicouche (1) selon l' une ou plusieurs des revendications 1 à 4, comprenant les étapes suivantes :
(i) découper la structure multicouche (1) en segments (24) ;
(ii) chauffer le segment (24) dans un four infrarouge (26) dans un domaine de température allant d' environ 200 °C à environ 350 °C ;
(iii) placer le segment de structure multicouche chauffé (28) dans un moule de capuchon chauffé (30) afin de former un capuchon protecteur (100) ;
(iv) presser le segment de structure multicouche chauffé (28) dans le moule de capuchon chauffé (30) avec une pression dans un domaine d' environ 6 895 000 Pa à environ 20 684 000 Pa afin d' obtenir le capuchon de protection (100).

6. Procédé pour la fabrication d'au moins une structure multicouche (1) selon la revendication 5, **caractérisé par le fait que** la découpe à l' étape (i) est appliquée dans la forme souhaitée dudit capuchon de protection (100).

7. Procédé pour la fabrication d'au moins une structure multicouche (1) selon l' une ou plusieurs des revendications 5 à 6, **caractérisé par le fait que** le segment (24) de l' étape (i) est pesé avant l' application de l' étape (ii).

8. Procédé pour la fabrication d'au moins une structure multicouche (1) selon l' une ou plusieurs des revendications 5 à 6, **caractérisé par le fait que** la température du moule chauffé (30) se situe dans un domaine allant d' environ 50 °C à environ 200 °C.

9. Procédé pour la fabrication d'au moins une structure multicouche (1) selon l' une ou plusieurs des revendications 5 à 6, **caractérisé par le fait que** le pressage à l' étape (iv) est appliqué dans un domaine temporel d' environ 20 s à environ 60 s.

10. Procédé pour la fabrication d'au moins une structure multicouche (1) selon l' une ou plusieurs des revendications 5 à 6, **caractérisé par le fait que** le capuchon de protection (100) obtenu à l' étape (iv) est poli pour lisser les bords.
